# FASCICULE DE BREVET EUROPEEN

(11) **EP 1 282 932 B1**
(45) Date de publication et mention de la délivrance du brevet: **06.01.2010**
(21) Numéro de dépôt: 01925810.2
(22) Date de dépôt: 11.05.2001
(51) Int. Cl.: H02K 7/06, F16C 19/10, H02K 5/128

(54) **ACTIONNEUR LINEAIRE OU ROTATIF**
DREH- UND LINEARANTRIEBSEINRICHTUNG
LINEAR OR ROTARY ACTUATOR

(30) Priorité: 19.05.2000 EP 00110734
(43) Date de publication de la demande: 12.02.2003
(73) Titulaire: Société Industrielle de Sonceboz S.A., 2605 Sonceboz (CH)
(72) Inventeur: PFISTER, Jean-François, CH-2605 Sonceboz (CH)
(74) Mandataire: Reuteler, Raymond Werner
(86) Numéro de dépôt international: PCT/IB2001/000816
(87) Numéro de publication internationale: WO 2001/089062

(56) Documents cités:
- US-A- 4 850 459
- US-A- 4 928 543
- US-A- 5 100 271

## Description

La présente invention concerne un actionneur linéaire ou rotatif, comprenant un organe entraîné en rotation par un moteur électrique pour le déplacement d'un organe à commander. L'organe peut en particulier être un écrou d'un système vis-écrou pour le déplacement linéaire de l'organe à commander.

Des actionneurs linéaires sont très répandus et utilisés dans beaucoup d'applications différentes, des exemples étant décrits dans les demandes de brevets européens N° EP-A-468920 et EP-A-987477. Les dispositifs décrits dans ces publications comportent un moteur pas-à-pas entraînant un système vis-écrou pour le déplacement linéaire d'un arbre solidaire d'une vis. Le moteur pas-à-pas permet de déplacer et positionner l'arbre de la vis rapidement, avec peu de pièces mécaniques et en utilisant une commande relativement simple.

Dans EP-A-468920, un pignon monté sur l'axe du moteur engage une roue solidaire de l'écrou. Un moyeu de la roue est pris en sandwich entre des épaules d'un boîtier pour le positionnement axial de la roue. Cette butée axiale est peu rigide et fournit un mauvais rendement en raison du frottement. D'autre part, dans certaines applications, le moteur électrique doit être séparé de l'organe à déplacer pour des raisons d'étanchéité ou de sécurité, telles que dans un système d'alimentation d'un gaz ou liquide combustible. Un dispositif tel que décrit dans EP-A-468920 ne peut pas être utilisé puisque la séparation entre le moteur et la vis est insuffisante.

Dans EP-A-987477, des aimants permanents sont montés sur l'écrou qui est donc entraîné directement par le champ magnétique créé par les bobines du moteur. L'écrou est monté dans le moteur sur un seul palier. Les supports axial et radial de l'écrou sont très peu rigides et donc instables, que ce soit par rapport à des forces statiques ou dynamiques. Dans beaucoup d'applications, la stabilité est pourtant un critère important puisque la vis est couplée à l'écrou qui sert aussi en tant que guide déterminant la stabilité et le positionnement axial et radial de la vis.

Il y a non seulement un besoin d'améliorer la performance et la fiabilité d'actionneur du type précité, mais aussi de réduire le coût et la taille de ces dispositifs.

Le dispositif décrit dans EP-A-987477 est muni d'une paroi de séparation entre les bobines du moteur et les aimants montés sur l'écrou pour des applications où une étanchéité entre le moteur et l'organe à commander est requise. Cette paroi de séparation comporte un rebord en appui contre un boîtier de la partie statorique du moteur d'un côté, et de l'autre côté en appui contre un joint de type O-ring pris en sandwich entre le rebord et un couvercle de l'actionneur. La fiabilité d'étanchéité dépend donc de la qualité d'étanchéité du joint, qui peut se détériorer avec l'âge, se déplacer sous l'effet de chocs ou être mal monté, par exemple au moment de la fabrication du moteur. Il y a un avantage à améliorer la fiabilité et la sécurité de tels dispositifs, notamment pour des applications en relation avec des fluides combustibles.

Le document US-A-4 928 543 décrit un actionneur correspondant au préambule de la revendication 1.

Un but de l'invention est de réaliser un actionneur performant, fiable et peu coûteux.

Il est avantageux pour des applications nécessitant une étanchéité ou séparation entre le moteur électrique et l'organe à commander, de réaliser un actionneur ayant une étanchéité fiable.

Il est en outre avantageux de réaliser un dispositif avec peu de pièces pour réduire les coûts d'assemblage et de fabrication.

Il est aussi avantageux de réaliser un actionneur linéaire ou rotatif compact, mais rigide et précis.

Des buts de l'invention ont été réalisés par un actionneur selon la revendication 1.

Dans la présente invention, un actionneur pour le déplacement linéaire d'un organe à commander comporte une partie de moteur et une partie de dispositif d'actionnement comprenant une vis à déplacement linéaire et un organe rotatif ayant une partie filetée complémentaire au filetage de la vis et pouvant être entraîné en rotation par la partie de moteur, l'organe rotatif étant supporté par des paliers sous forme de butées à billes à quatre points de contact disposés de chaque côté axial d'une partie filetée de l'organe rotatif pour le guidage axial et radial de celui-ci, les chemins de roulement des billes étant intégrés directement dans l'organe rotatif, d'une part, et des parties de corps ou de boîtier de l'actionneur, d'autre part.

Les chemins de roulement sont de préférence formés de tôle emboutie qui peut être durcie par une opération de trempe. Les chemins de roulement peuvent être fixés à l'organe rotatif et respectivement aux parties de corps ou de flasque par des languettes élastiques permettant l'encliquetage des pièces dans une direction axiale, correspondant à la direction de l'axe de rotation de l'organe rotatif, la vis, les billes et les flasques pouvant aussi tous être montés sur la partie de moteur dans la direction axiale. Les chemins de roulement peuvent aussi être collées, soudées ou surmoulées respectivement audit écrou et aux parties de corps ou de boîtier.

Avantageusement, cette construction permet de réduire sensiblement les coûts d'assemblage et de fabrication des pièces. Les butées à billes à quatre points de contact de chaque côté de l'organe rotatif permet d'avoir une construction très rigide, stable, précise et compacte.

Les points de contact entre les billes et les surfaces inclinées, radialement intérieures et radialement extérieures, sont disposés de façon à satisfaire la relation A/B = C/D où D et C sont les rayons des points de contact radialement intérieurs respectivement radialement extérieurs de l'axe de rotation de l'organe rotatif, et où B et A sont les diamètres du parcours des points de contact radialement intérieurs respectivement radialement extérieurs sur la bille. Cette disposition des points de contact assure que les billes roulent sur les chemins sans glisser.

Selon un autre aspect de la présente invention, un actionneur pour le déplacement linéaire ou rotatif d'un organe à commander comporte une partie de moteur, une partie de dispositif d'actionnement comprenant un organe rotatif comportant des parties aimantées, l'organe rotatif étant apte à être entraîné par la partie de moteur, un entrefer étant formé entre les parties aimantées et la partie de moteur, l'actionneur comportant en outre une paroi de séparation continue entre la partie de moteur et la partie d'actionnement et ayant une portion disposée dans ledit entrefer, caractérisé en ce qu'une portion de la paroi de séparation est sous forme de flasque extérieure pouvant être montée contre un support ou une paroi de montage d'un dispositif à commander.

Avantageusement, cette construction économique permet de séparer fiablement la partie de moteur de la partie d'actionnement de façon étanche, non seulement du point de vue de l'écoulement des fluides, mais aussi du point de vue électrique. Des arcs électriques provenant de la partie de moteur électrique sont donc séparés de la partie d'actionnement de façon très effective et fiable.

La partie d'actionnement peut être sous forme d'une partie de dispositif vis-écrou, comprenant une vis à déplacement linéaire entraînée par un écrou formant l'organe rotatif couplé au moteur.

Les parties aimantées peuvent comporter un ou plusieurs aimants fixés ou solidaires de l'écrou. Les aimants sur l'organe rotatif sont de préférence des aimants permanents, mais ils peuvent aussi être des électro-aimants.

La paroi de séparation ou tout au moins la portion disposée dans l'entrefer peut être en un matériau magnétique, de façon à augmenter le flux magnétique à travers l'entrefer.

La paroi de séparation peut être en un matériau conducteur d'électricité, tel qu'une tôle en acier qui est, d'une part, résistante et peu coûteuse et, d'autre part, assure une séparation électrique et physique de la partie du moteur et de la partie du dispositif vis-écrou.

La paroi de séparation peut avantageusement agir en tant qu'élément structurel pour le montage et le positionnement de la partie de moteur et de la partie d'actionnement.

D'autres buts et aspects avantageux de l'invention ressortiront des revendications et de la description et des dessins annexés, dans lesquels:
la Fig. 1 est une vue en coupe d'un actionneur linéaire selon une première forme d'exécution de l'invention;
la Fig. 2 est une vue détaillée en coupe d'un des paliers d'un actionneur selon l'invention;
la Fig. 3 est une vue détaillée en coupe d'une autre forme d'exécution d'un palier d'un actionneur selon l'invention;
la Fig. 4 est une vue en perspective du palier selon la Fig. 3; et
la Fig. 5 est une vue détaillée en coupe d'une variante d'un palier selon la Fig. 3.

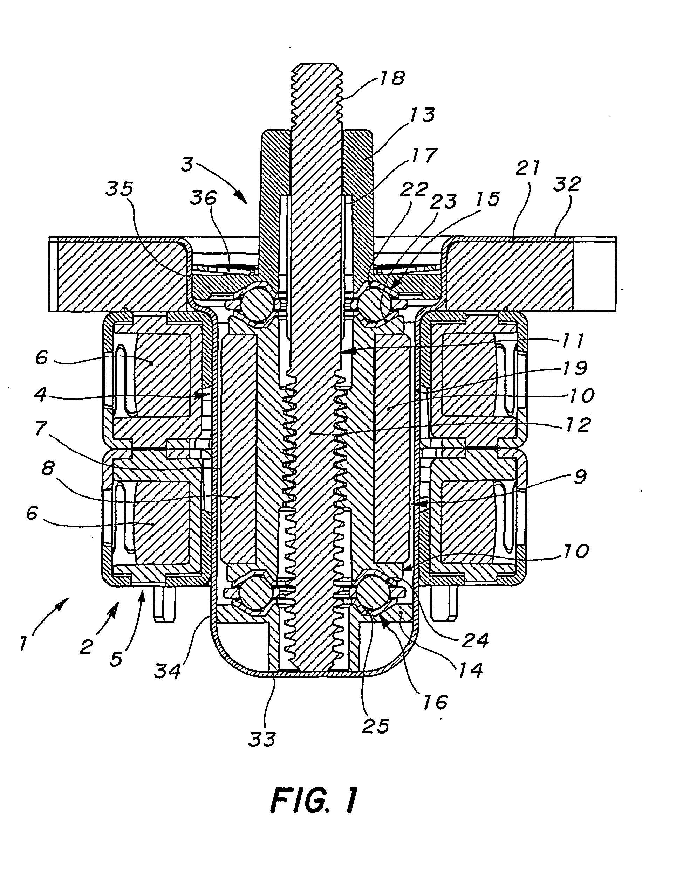

En faisant référence à la Fig. 1, un actionneur 1 comporte une partie de moteur électrique 2, une partie d'actionnement 3 et une paroi de séparation 4. La partie de moteur électrique 2 comporte, dans ces exemples, un moteur pas-à-pas ayant des aspects similaires à des moteurs pas-à-pas conventionnels, tels que le stator 5, comportant deux parties bobinées 6 séparées par un entrefer 7 d'aimants permanents 8 montés sur un organe rotatif 9 de la partie d'actionnement 3. L'utilisation d'un moteur pas-à-pas est avantageuse puisqu'il permet de facilement et rapidement régler la position de l'organe à commander dans une construction compacte et peu coûteuse. D'autres types de moteurs réversibles peuvent néanmoins être utilisés dans la présente invention.

La partie d'actionnement 3 comporte l'organe rotatif 9, qui est muni d'une partie filetée 10 engageant un organe complémentaire sous forme d'une vis 11 ayant une partie filetée 12, un couvercle 13, une partie de corps 14 et des paliers 15, 16 pour le support en rotation de l'organe rotatif 9.

Dans la forme d'exécution illustrée, la rotation de l'organe rotatif 9 entraîne le déplacement axial de la vis 11 qui est munie d'éléments de guidage axial 17, coopérant avec une forme où des éléments de guidage axial complémentaires du couvercle 13 pour bloquer la rotation de la vis. La vis 11 peut être couplée à un organe à déplacer (non-illustré), par exemple en le fixant à une partie filetée 18 de la vis s'étendant hors du couvercle 13.

D'autres variantes sont toutefois possibles sans sortir du cadre de l'invention. Par exemple, l'organe rotatif peut être solidaire d'une vis qui déplace, linéairement, un écrou couplé à l'organe à commander ou faisant même partie de l'organe à commander. Dans une autre variante, la vis peut être remplacée par d'autres organes, par exemple un axe pour l'actionnement en rotation de l'organe à commander.

La vis 11 dans la variante illustrée peut, par exemple, être couplée à un organe pour la commande du débit de gaz combustible dans un système d'alimentation ou d'écoulement de combustible, un exemple spécifique étant un système de réglage du débit pour brûleurs à gaz.

Dans de telles applications, il est important pour des raisons de sécurité de séparer la partie de moteur électrique de la partie actionnant la vanne ou autre organe se trouvant en présence ou à proximité d'un fluide combustible.

Dans la présente invention, la paroi de séparation 4 disposée entre la partie d'actionnement 3 et la partie de moteur 2 est continue et s'étend jusqu'à l'extérieur de l'actionneur, formant ainsi une séparation très efficace et fiable entre ces parties.

Dans des formes d'exécution avantageuses, la paroi de séparation 4 est formée d'une paroi conductrice, telle qu'une tôle métallique, qui peut être reliée électriquement à l'installation à commander (et à la terre), de sorte qu'il n'y a aucune différence de potentiel électrique entre cette paroi et l'installation à commander.

La paroi permet de séparer la partie de moteur de la partie de dispositif vis-écrou par une étanchéité physique et électrique, notamment si la paroi est conductrice.

La paroi de séparation 4 comporte une partie cylindrique 19 dans l'entrefer 7 entre le stator 5 et les aimants 8 sur l'organe rotatif 9, une partie de fond 20 et une partie extérieure 21 sous forme de flasque qui présente une surface 32 destinée à être montée contre un support ou une paroi d'un dispositif à commander. La paroi de séparation 4, ou tout au moins la partie 19 dans l'entrefer 7, peut être en un matériau ayant une bonne perméabilité magnétique de façon à augmenter le flux magnétique entre le stator 5 et les aimants 8.

Le stator 5 du moteur se positionne autour de la paroi de séparation 4 et la partie d'actionnement 3 se positionne à l'intérieur de la partie cylindrique 19 par des surfaces de positionnement respectivement axiale et radiale 33, 34 de la partie de corps 14 et par des surfaces de positionnement 35 du couvercle 13, toutes ces surfaces étant en appui contre la paroi de séparation.

Le couvercle 13 est retenu par un moyen de fixation mécanique tel qu'une bague élastique ou un circlip 36 engageant d'une part le couvercle et d'autre part la paroi de séparation.

Avantageusement, la paroi de séparation est également un élément structurel permettant l'assemblage de la partie de moteur avec la partie d'actionnement 3.

Les paliers 15, 16 de l'organe rotatif sont sous forme de butées à billes à trois ou à quatre points de contact pour le positionnement axial et radial de l'organe rotatif, un palier étant disposé de chaque côté de la partie filetée 10 de l'organe rotatif. Un des paliers 15 est disposé entre la partie de couvercle 13 et l'organe rotatif 9, et l'autre palier 18 est disposé entre l'organe rotatif et la partie de corps 14 qui est montée contre la paroi de séparation 4. Les chemins de roulement 22, 23 du roulement à billes 15 sont solidaires du couvercle 13 respectivement de l'organe rotatif 9, et les chemins de roulement 24, 25 de la butée à billes 16 sont solidaires de l'organe rotatif 9 respectivement de la partie de corps 14.

Les chemins de roulement sont avantageusement fabriqués en tôle emboutie. Ils peuvent ensuite être soudés, collés, surmoulés ou fixés mécaniquement sur la partie de couvercle, l'organe rotatif ou la partie de corps. Avantageusement, ceci permet de réaliser une construction particulièrement compacte et rigide à un coût de fabrication économique. En effet, l'actionneur est formé de peu de pièces qui sont faciles à assembler, ce qui réduit fortement le coût de fabrication. Il est à noter, par exemple, que les pièces telles que les roulements à billes, l'organe rotatif, le couvercle, la paroi de séparation et le moteur peuvent être assemblés dans une direction axiale, ce qui facilite l'automatisation des procédés d'assemblage de l'actionneur.

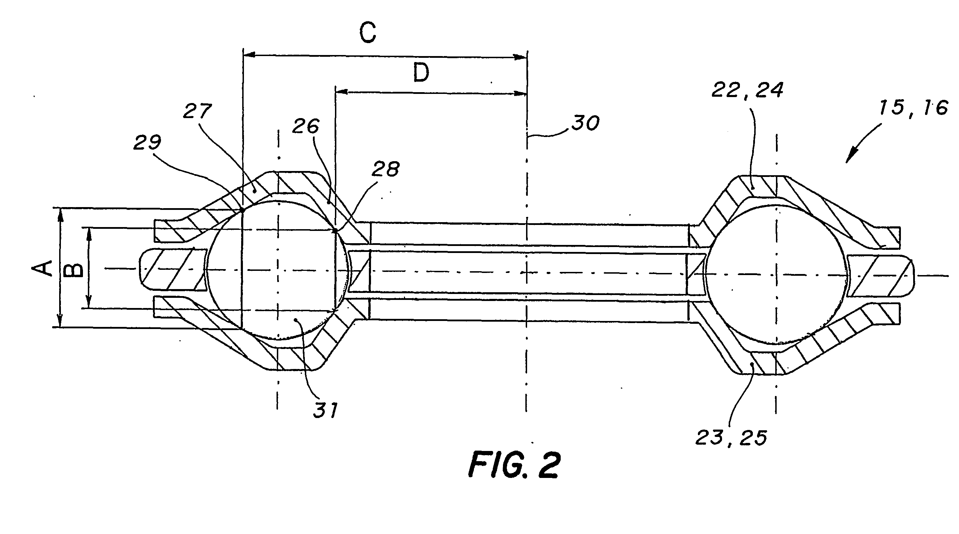

En faisant référence à la Fig. 2, les parois inclinées radialement intérieures 26 et radialement extérieures 27 des chemins de roulement sont disposées de façon que la relation A/B = C/D, où D et C sont les rayons des points de contact radialement intérieurs 28 respectivement radialement extérieurs 29 de l'axe de rotation 30 de l'organe rotatif, et où B et A sont les diamètres du parcours des points de contact radialement intérieurs 28 respectivement radialement extérieurs 29 sur la bille. En respectant cette relation, les billes 31 roulent sur les chemins de roulement 22, 24 et 23, 25 sans glisser, donc avec un minimum d'usure et de résistance.

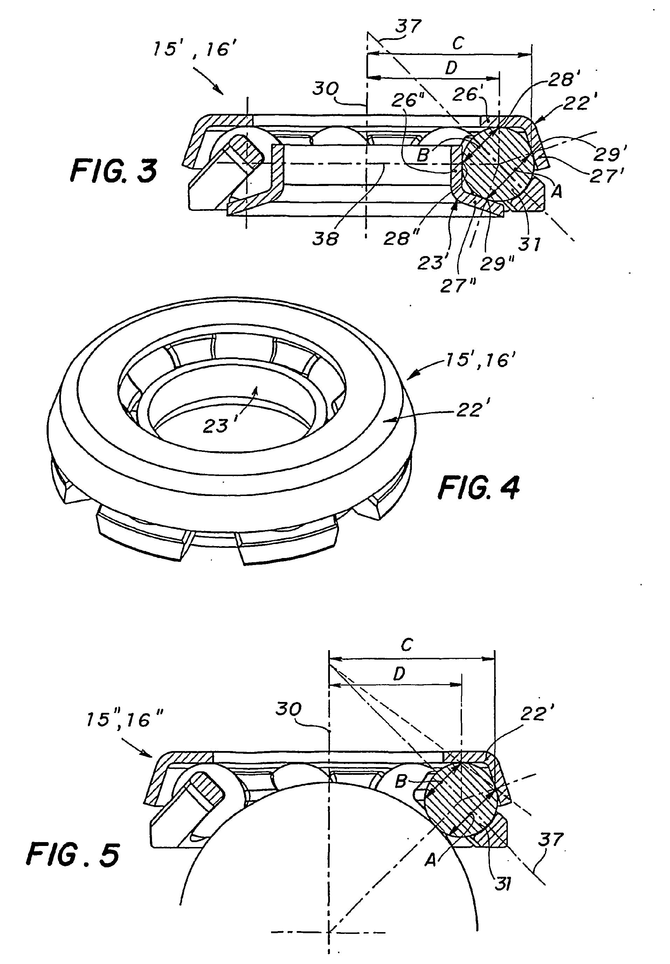

Les Figures 3 et 4 montrent une autre forme d'exécution des roulements, dans laquelle l'axe de rotation 37 des billes 31 est inclinée par rapport au plan 38 traversant les centres des billes. L'un des chemins de roulement 22' est positionné de manière radialement extérieure par rapport aux billes, et l'autre chemin de roulement 23' de manière radialement intérieure par rapport aux billes. Dans cette forme d'exécution, les parois inclinées radialement intérieures 26', 26" et radialement extérieures 27', 27" des chemins de roulement sont également disposes de façon que la relation A/B = C/D, où D et C sont les rayons des points de contact radialement intérieurs 28', respectivement radialement extérieurs 29' de l'axe de rotation 30 de l'organe rotatif, et où B et A sont les diamètres des cercles parcourus par les points de contact radialement intérieurs 28' respectivement radialement extérieurs 29' sur la bille 31. En respectant cette relation, les billes roulent sur les chemins de roulement sans glisser. Cette disposition des chemins de roulement conduisant à l'inclinaison de l'axe de rotation 37 des billes, permet aux roulements de supporter des forces radiales plus élevées que peuvent supporter les roulements selon la Fig. 2. En d'autres mots, les paliers selon les Figures 3 et 4 ont une plus grande rigidité radiale que les paliers selon la Fig. 2.

Le chemin de roulement intérieur 23' peut être remplacé par une surface sphérique, telle que montrée dans la Fig. 5, où une surface conique, de manière à ce qu'il n'y ait pas plus que trois points de contact entre chaque bille et les chemins de roulement. La surface conique ou sphérique peut être réalisée par un chemin de roulement, par exemple en tôle emboutie et durcie par trempe, ou être usinée ou autrement formée directement sur l'organe rotatif 9.

## Revendications

1. Actionneur pour le déplacement linéaire d'un organe à commander comportant une partie de moteur (2) et une partie de dispositif d'actionnement (3) comprenant un organe rotatif (9) muni d'une partie filetée (10) complémentaire au filetage d'une vis (11), l'organe rotatif pouvant être entraîné en rotation par la partie de moteur et étant supporté par des paliers (15, 16; 15', 16'; 15", 16") sous forme de butées à billes à trois ou à quatre points de contact disposés de chaque côté axial de ladite partie filetée pour le guidage axial et radial de l'organe rotatif, des chemins de roulement des billes (22, 24, 23, 25; 22', 23') étant intégrés dans l'organe rotatif (9), d'une part, et des parties de corps (14) ou de couvercle (13) de l'actionneur, d'autre part **caractérisé en ce que** des parois inclinées radialement intérieures (26, 26') et radialement extérieures (27, 27') des chemins de roulement sont disposées de façon que la relation A/B = C/D, où D et C sont les rayons des points de contact radialement intérieurs (28, 28') respectivement radialement extérieurs (29, 29') de l'axe de rotation (30) de l'organe rotatif, et où B est le diamètre du cercle parcouru sur une bille (31) par les points de contact radialement intérieurs (28, 28') et A est le diamètre du cercle parcouru sur une bille (31) par les points de contact radialement extérieurs (29, 29').

2. Actionneur selon la revendication 1, **caractérisé en ce que** les chemins de roulement sont formés de tôles de métal embouties.

3. Actionneur selon l'une des revendications précédentes, **caractérisé en ce que** les chemins de roulement sont fixés respectivement sur la partie de couvercle, l'organe rotatif ou la partie de corps par encliquetage, surmoulage, soudage ou collage.

4. Actionneur selon l'une des revendications précédentes, **caractérisé en ce qu'**il comporte une paroi de séparation (4) séparant la partie de moteur de la partie de dispositif d'actionnement et ayant une partie disposée dans un entrefer (8) entre la partie de moteur et l'organe rotatif de la partie d'actionnement.

5. Actionneur selon la revendication 4, **caractérisé en ce que** la paroi de séparation s'étend jusqu'à une partie (32) sous forme de flasque extérieur pouvant être monté contre un support ou une paroi de montage d'un dispositif à commander.

6. Actionneur selon la revendication 4 ou 5, **caractérisé en ce que** la paroi de séparation (5) est en un matériau conducteur ayant une bonne perméabilité magnétique.

7. Actionneur selon la revendication précédente, **caractérisé en ce que** la paroi de séparation (4) est fabriqué avec une tôle métallique.

8. Actionneur selon l'une des revendications 4 à 7, **caractérisé en ce que** la paroi de séparation est également un élément structurel permettant le montage et le positionnement de la partie de moteur et de la partie d'actionnement.

## Claims

1. An actuator for the linear displacement of a member to be controlled, including a motor portion (2) and an actuation device portion (3) comprising a rotary member (9) provided with a threaded portion (10) mating the thread of a screw (11), the rotary member being able to be driven into rotation by the motor portion and being supported by bearings (15, 16; 15', 16'; 15", 16") in the form of ball thrust bearings with three to four contact points positioned on each axial side of said threaded portion for axially and radially guiding the rotary member, rolling paths for the balls (22, 24, 23, 25; 22', 23') being integrated into the rotary member (9), on the one hand, and body (14) or lid (13) portions of the actuator on the other hand, **characterized in that** radially inner (26, 26') and radially outer (27, 27') inclined walls of the rolling paths are positioned so as to have the relationship A/B=C/D, wherein D and C are the radii of the radially inner (28, 28'), respectively radially outer (29, 29') contact points from the axis of rotation (30) of the rotary member, and wherein B is the diameter of the circle covered on a ball (31) by the radially inner contact points (28, 28') and A is the diameter of the circle path on a ball (31) defined by the radially outer contact points (29, 29').

2. The actuator according to claim 1, **characterized in that** the rolling paths are formed from stamped metal sheets.

3. The actuator according to any of the preceding claims, **characterized in that** the rolling paths are respectively attached on the lid portion, the rotary member or the body portion, by snap-on fastening, overmolding, welding or adhesive bonding.

4. The actuator according to any of the preceding claims, **characterized in that** it includes a separation wall (4) separating the motor portion from the actuation device portion and having a portion positioned in an air gap (8) between the motor portion and the rotary member of the actuation portion.

5. The actuator according to claim 4, **characterized in that** the separation wall extends up to a portion (32) in the form of an outer flange which may be mounted against a support or a wall for mounting a device to be controlled.

6. The actuator according to claim 4 or 5, **characterized in that** the separation wall (5) is in a conductive material having high magnetic permeability.

7. The actuator according to the preceding claim, **characterized in that** the separation wall (4) is made from a metal sheet.

8. The actuator according to any of claims 4 to 7, **characterized in that** the separation wall is also a structural member allowing mounting and positioning of the motor portion and of the actuation portion.

## Patentansprüche

1. Stellglied für die lineare Verschiebung eines zu steuernden Organs, das einen Motorenteil (2) und einen Antriebsvorrichtungsteil (3) aufweist, das ein Rotationsorgan (9) umfasst, das mit einem zum Gewinde einer Schraube (11) komplementären Gewindeteil (10) ausgestattet ist, wobei das Rotationsorgan vom Motorenteil rotierend antreibbar ist und von Lagern (15, 16; 15', 16'; 15", 16") in Form von Druckkugellagern mit drei oder vier Kontaktpunkten getragen wird, die auf jeder Seite axial zum Gewindeteil für die axiale Führung angeordnet sind und radial zum Rotationsorgan, wobei die Rollwege der Kugeln (22, 24, 23, 25; 22', 23') einerseits in das Rotationsorgan (9) integriert sind und Teile des Körpers (14) oder Deckels (13) des Stellglieds andererseits, **dadurch gekennzeichnet, dass** die radial geneigten Innen- und Außenwände (26, 26'; 27, 27') der Rollwege derart angeordnet sind, dass das Verhältnis A/B = C/D, wobei D und C Radien der radial inneren beziehungsweise radial äußeren Kontaktpunkte (28, 28'; 29, 29') von der Rotationsachse (30) des Rotationsorgans sind, und wobei B der Durchmesser des Kreises ist, der auf einer Kugel (31) von den radial inneren Kontaktpunkten (28, 28') durchlaufen wird und A der Durchmesser des Kreises ist, der auf einer Kugel (31) von den radial äußeren Kontaktpunkten (29, 29') durchlaufen wird.

2. Stellglied nach Anspruch 1, **dadurch gekennzeichnet, dass** die Rollwege aus getriebenen Metallblechen geformt sind.

3. Stellglied nach einem der vorangehenden Ansprüche, **dadurch gekennzeichnet, dass** die Rollwege jeweils auf dem Deckelteil, dem Rotationsorgan oder dem Körperteil durch Einrasten, Formen, Schweißen oder Kleben befestigt sind.

4. Stellglied nach einem der vorangehenden Ansprüche, **dadurch gekennzeichnet, dass** es eine Trennwand (4) umfasst, die den Motorenteil vom Antriebsvorrichtungsteil trennt und einen Teil hat, der in einem Spalt (8) zwischen dem Motorenteil und dem Rotationsorgan des Antriebsteils angeordnet ist.

5. Stellglied nach Anspruch 4, **dadurch gekennzeichnet, dass** sich die Trennwand bis zu einem Teil (32) erstreckt, das wie ein auf einem Träger oder einer Montagewand einer Steuervorrichtung montierbares Außenblech geformt ist.

6. Stellglied nach Anspruch 4 oder 5, **dadurch gekennzeichnet, dass** die Trennwand (5) aus einem leitenden Material besteht mit einer guten magnetischen Permeabilität.

7. Stellglied nach vorangehendem Anspruch, **dadurch gekennzeichnet, dass** die Trennwand (4) mit einem Metallblech hergestellt ist.

8. Stellglied nach einem der Ansprüche 4 bis 7, **dadurch gekennzeichnet, dass** die Trennwand ebenfalls ein Strukturelement ist, das die Montage und die Positionierung des Motorenteils und des Antriebsteils erlaubt.
